# EUROPÄISCHE PATENTSCHRIFT

(11) **EP 1 319 935 B1**
(45) Veröffentlichungstag und Bekanntmachung des Hinweises auf die Patenterteilung: **25.04.2007**
(21) Anmeldenummer: 02026737.3
(22) Anmeldetag: 30.11.2002
(51) Int. Cl.: G01L 19/06, G01R 17/12

(54) **Signalverarbeitungseinrichtung für einen Druckschalter od. dgl.**
Signal processing arrangement for a pressure switch or the like
Arrangement de traitement d'un signal d'un commutateur de pression ou similaire

(30) Priorität: 11.12.2001 DE 10160794
(43) Veröffentlichungstag der Anmeldung: 18.06.2003
(73) Patentinhaber: Parker Hannifin GmbH, 33659 Bielefeld (DE)
(72) Erfinder: Drossel, Detlef, 33602 Bielefeld (DE)
(74) Vertreter: Müller, Karl-Ernst

(56) Entgegenhaltungen:
- US-A- 3 960 010
- US-A- 4 862 382
- US-A- 5 233 867
- US-A- 5 681 997
- US-B1- 6 223 138

## Beschreibung

Die Erfindung betrifft eine Signalverarbeitungseinrichtung für einen Druckschalter oder dgl., umfassend ein Sensorelement, wie Drucksensor zur Lieferung eines einem anstehenden Druck od. dgl. entsprechenden analogen elektrischen Signals, eine dem Sensorelement nachgeschaltete Signalverarbeitungseinheit zur Verstärkung und Digitalisierung des analogen Signals, und eine der Signalverarbeitungseinheit nachgeschaltete Ansteuereinheit für elektrische Schalter zur Schaltung von externen Lasten od. dgl., *wobei* die Signalverarbeitungseinheit einen Chopperverstärker umfaßt, *und die Signalverarbeitungseinheit* die Polarität des am Eingang des *Chopperverstärkers* anliegenden, vom Sensorelement gelieferten analogen elektrischen Signals sowie des an seinem Ausgang anliegenden verstärkten analogen elektrischen oder digitalisierten Signals im gleichen Takt umschaltet oder verrechnet.

Ein derartige Signalverarbeitungseinrichtung für einen Druckschalter ist aus der US 5 681 997 bekannt. Des weiteren sei auf ein Datenblatt der Firma Parker Fluid Connectors mit der Bezeichnung "Digitaler Druckschalter SCPSD" hingewiesen.

Ein derartiger Druckschalter kommt in Störung-, Regelungs- oder Überwachungssystemen zum Einsatz, bei denen schnelle druckabhängige Schalt- oder Analogsignale benötigt werden. Die bekannte Konstruktion erlaubt eine kompakte Bauweise, hohe Lebensdauer und ist für den dauerhaften Serieneinsatz in Hydraulik- und Pneumatikanwendungen geeignet.

Der Druck wird vorzugsweise mit piezoresistiven Messzellen erfaßt, die für viele Anwendungen ausreichende Nullpunkt- und Langzeitstabilität aufweisen. Die aus dem Datenblatt bekannte Anordnung weist zwei voneinander unabhängig programmierbare Schaltausgänge und einen frei programmierbaren Analogausgang für die Verbindung mit elektrischen Steuerungen auf. Jeder Schaltausgang besitzt zwei Druckschaltpunkte, mit denen man die Ein- und Ausschaltdrücke frei einstellen kann (variable Hysterese). Durch variabel einstellbare Verzögerungszeiten können auch unerwünschte Druckspitzen von kurzer Dauer oder hoher Frequenz ausgefiltert werden (Dämpfung). Die Schaltausgänge werden entsprechend den eingestellten Schaltpunkten, Hysterese- oder Fensterfunktionen als Öffner oder Schließer geschaltet und über die Statusanzeige angezeigt. Ein vorliegender Funktionsfehler kann über eine digitale Displayanordnung signalisiert und bei der Weiterverarbeitung berücksichtigt werden. Die Elektronik kann voll vergossen und somit gegen Feuchtigkeit und Vibration widerstandsfähig gemacht werden. Die bekannte Signalverarbeitungseinrichtung kann bei Werkzeugmaschinen, Kunststoffspritzmaschinen bis hin zu Anwendungen im Kompressorenbau, hydraulischem und pneumatischem Anlagenbau, Maschinenbau, Pumpenbau, Pressenbau und in der Prozesstechnik angewendet werden.

Die Anordnung kann für schnelle 2-Punktregelungen eingesetzt werden, wie auch für die kontinuierliche Drucküberwachung bei Filtern, Pumpen, Verdichtern, Speichern, hydraulischen und pneumatischen Maschinen und Aggregaten, wie auch für die dezentrale Visualisierung von Maschinenparametern wie Druck und Spitzendruck.

Ein Analogausgang von einigen mA ist geeignet zum Anschluß an analoge Auswerteeinheiten wie auch analoge Regeleinheiten, Informationseinrichtungen und Personalcomputer.

Das Brückensignal der bei der gemaß dem Datenblatt wie auch gemäß der US 5 681 997 bekannten Anordnung eingesetzten piezoresistiven Messzelle hat einen Messbereichsendwert von ca. 100 mV. Dieses relativ große Signal kann mit einem einfachen Instrumentenverstärker verstärkt werden. Soll ein Druckschalter verwendet werden, der eine andere Messzelle, z. B. DMS (Dehnungsmessstreifen) oder Keramik einsetzt, ergibt sich ein Messbereichsendwert von nur ca. 10 mV. Für ein so kleines Signal reicht ein einfacher, preisgünstigere Verstärker nicht mehr aus, da bei Temperaturänderung das gemessene Signal sich unzulässig stark verändert.

Ein idealer Verstärker sollte nur das Eingangssignal verstärken, d. h., dass der Ausgang gleich dem Eingang mal Verstärkung ist. Ein real existierender Verstärker hat dabei mehrere Fehler:
- Offsetdrift (es tritt auch bei 0 Volt am Eingang eine Ausgangsspannung auf, diese ist u. a. auch temperatur- und alterungsabhängig);
- Thermospannungen (auch temperaturabhängig);
- Spannungen durch Leitungsimpedanzen;
- Rauschen am Ausgang (besonders bei niedrigen Frequenzen).

Je bessere Verstärker man verwendet, desto kleiner werden diese Fehler. Desto teuerer werden aber auch die Verstärker.

Um so kleine Signale zu verarbeiten, wie sie oben angedeutet sind, werden somit präzise und teure Verstärker notwendig. Das ist nachteilig.

Aufgabe der Erfindung ist es, die insbesondere vorstehend beschriebene niederfrequenten- oder Gleichspannungsstörungen aus dem Signal einer Signalverarbeitungseinrichtung zu eliminieren, die für einen Drucksensor/Druckschalter, Temperatursensor/Temperaturschalter oder Kraftsensor/Kraftschalter oder dgl. vorgesehen ist, jeweils mit elektrischem Analog- und/oder Digitalausgang (Bus-Ausgang).

Mit "Sensor" oder "Sensorelement" ist hier ein "signalgebendes elektronisches Element" gemeint, das einen physikalischen Wert, wie Druck, Temperatur, Kraft in ein elektronisches Signal umsetzt, das analog oder digital ausgegeben wird.

Entsprechend ist die Anzeigeeinrichtung für die Anzeige eines analogen Signals, geliefert auf einer einfachen Leitung, oder eines digitalen Signals, geliefert auf einer Mehrfach-Leitung (Bus-Leitung) vorgesehen.

Diese Aufgabe wird durch die im kennzeichnenden Teil des Anspruchs 1 aufgeführten Merkmale gelöst.

Durch diese Maßnahme wird erreicht, dass die niederfrequenten- oder Gleichspannungsstörungen ausgeschaltet werden.

Dadurch, dass die Polarität des Messsignals am Verstärkereingang und am Verstärkerausgang im gleichen Takt in zwei Phasen umgeschaltet werden, subtrahieren sich die beiden Signale der beiden Polaritäten bei der Auswertung. In Formeln ergibt sich:
Phase 1: Ausgangsspannung 1 = Eingangsspannung*Verstärkung + Störspannung
Phase 2: Ausgangsspannung 2 = -Eingangsspannung*Verstärkung + Störspannung Ergebnis = Ausgangsspannung 1 - Ausgangsspannung 2
Subtraktion: = 2*Eingangsspannung*Verstärkung + Störspannung - Störspannung = 2*Eingangsspannung*Verstärkung

Die genannten im Verstärker entstehenden Störspannungen kürzen sich also heraus.

Die Funktion des beschriebenen Chopperverstärkers läßt sich auf verschiedene Weisen umsetzen. Besonders günstig ist es, das Sensorelement als Messbrücke darzustellen, wobei die Umschaltung der Polarität des am Eingang des Chopperverstärkers anliegenden Signals dadurch erreicht wird, dass derMesswiderstand oder die Messbrücke als Speise- oder Eingangsspannung eine Rechteckwechselspannung mit der Taktfrequenz zugeführt wird.

Statt der Messbrücke kann also auch ein Messwiderstand ausreichend sein.

Der Umschalttakt kann günstigerweise in einer Mikrocontrollereinheit erzeugt werden.

Besonders günstig ist es dann, wenn die Differenzbildung von der Mikrocontrollereinheit gesteuert wird und/oder in ihr erfolgt.

Die Erfindung wird nachfolgend anhand von Ausführungsbeispielen näher erläutert, die in den Zeichnungen dargestellt sind.

Es zeigt:
Fig. 1 ein Blockschaltbild einer Anordnung zur Steuerung von Druckschaltern, bei der die erfindungsgemässe Anordnung eingesetzt werden kann;
Fig. 2 ein Blockschaltungsdiagramm der erfindungsgemässen Anordnung; und
Fig. 3 ein Zeitdiagramm der Spannungen des Blockschaltungsdiagramms der Fig. 2.

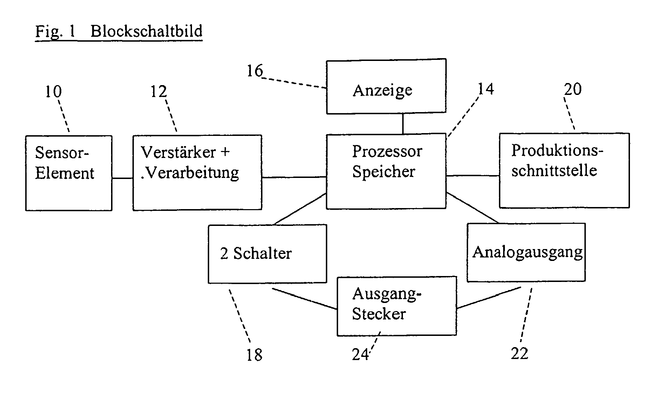

In dem Blockschaltbild gemäß Fig. 1 ist ein Sensorelement 10 zu erkennen, wie beispielsweise ein piezoresistiver Drucksensor, ein DMS (Dehnungsmessstreifen) oder auch ein keramisches Sensorelement, jeweils zur Lieferung eines einem Druck oder dgl. entsprechenden analogen elektrischen Signals. Dem Sensorelement nachgeschaltet und dessen Signal aufnehmend ist eine Signalverarbeitungseinheit 12, in der das Signal verstärkt und/oder verarbeitet und dabei digitalisiert wird. In einer diesem Block 12 nachgeschalteten Ansteuereinheit 14 kann z. B. ein Prozessor und ein Speicher für diese digitalen Daten enthalten sein, wie auch ein weiterer Digital-Baustein für beispielsweise eine Anzeigeeinrichtung, wie Digitalanzeige 16, wie auch weitere Digital- Bausteine für die Ansteuerung von einem oder mehreren Schaltern 18, eine Produktionsschnittstelle 20 und einen Analogausgang 22. Gemäß Fig. 1 kann von dem Analogausgang 22 wie auch von den Schaltern 18 auch noch ein Ausgangsstecker 24 ausgehen, um so die Kontaktabgabe zu weiteren Einrichtungen zu erleichtern.

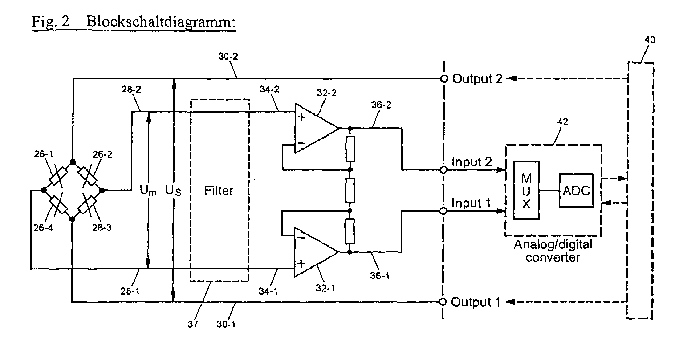

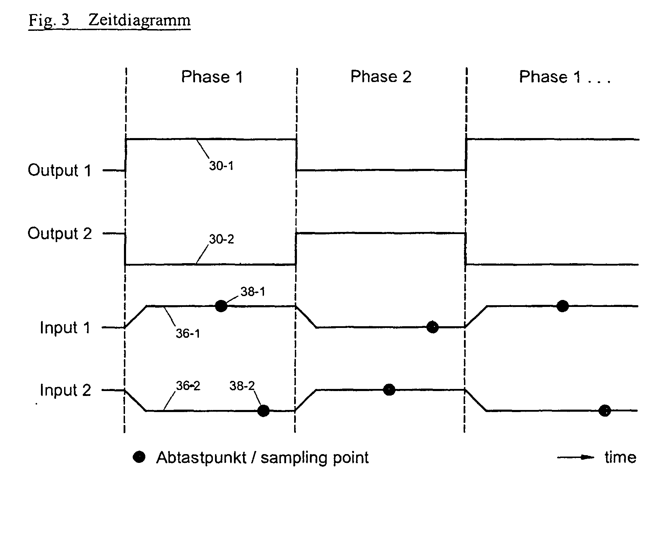

Die Signalverarbeitungseinheit 12 gemäß Fig. 1 umfasst einen Chopperverstärker, wie er in Fig. 2 jetzt näher erläutert sei. Ein Chopperverstärker arbeitet in der Weise, dass die Polarität des an seinem Eingang anliegenden, z. B. einem Messwert entsprechendes analoges elektrisches Signal sowie das an seinem Ausgang anliegende verstärkte analoge elektrische oder digitalisierte Signal im gleichen Takt umgeschaltet oder verrechnet werden. Das geschieht bei der Anordnung gemäß Fig. 2 dadurch, dass das Sensorelement 10 einen Messwiderstand oder eine Messbrücke darstellt, bestehend aus vier Messelementen 26-1, 26-2, 26-3 und 26-4, die in Form einer Brücke zusammengeschaltet sind und beispielsweise aus Dehnungsmessstreifen oder keramischen Elementen bestehen, deren Widerstand mit ihrer Dehnung oder Stauchung sich ändert. Legt man zwei sich gegenüberliegende Punkte der Messbrücke an eine Speisespannung oder Versorgungsspannung an, beispielsweise über die Leitung 30-1 oder 30-2 eine von einem Block 40 gelieferte Speisespannung Us, zugeführt über Output 1 oder Output 2, führt dies zu Strömen durch die beiden Messbrückenzweige bestehend aus den Elementen 26-2, 26-3 bzw. 26-1, 26-4 und zu entsprechenden Spannungsabfällen, die abgegriffen werden können an den Verbindungspunkten zwischen den Elementen 26-2 und 26-3 bzw. 26-1 und 26-4, entsprechend den Leitungen 28-2 oder 28-1. Ist die Messbrücke ausgeglichen, sind die Spannungsabfälle gleich groß und es entsteht ein Messspannungswert von 0 V. Kommt die Brücke ins Ungleichgewicht, beispielsweise durch Druckbelastung oder durch Temperaturänderung, entsteht eine von dem Ungleichgewicht abgängige Messspannung zwischen den beiden Anschlussleitungen 28-1 und 28-2, das ist Messspannung Um. Dieses Brückenausgangssignal (bei einem einfachem Widerstand anstelle einer Messbrücke der an ihm anliegende Spannungsabfall) wird einer aus Operationsverstärkern 32-1 und 32-2 bestehenden, zwei Eingänge 34-1 und 34-2 und zwei Ausgänge 36-1 und 36-2 aufweisenden Schaltung zugeführt, die so aufgebaut ist, dass sie an ihren zwei Ausgängen 36-1 und 36-2 Spannungen 38-1, 38-2 gemäss Fig. 3 entstehen, die zeitlich ihre Polarität wechseln und eine Höhe haben, die von der von den Sensorelementen abgefühlten Messgrösse, wie Druck, abfängt. Der Messbrücke wird keine Gleichspannung als Speisespannung, sondern eine Wechselspannung zugeführt, deren Zeitverlauf bei 30-1 und 30-2 in Fig. 3 angedeutet ist. In der ersten (Phase 1) einer aus zwei Phasen bestehenden Taktdauer wird über Leitung 30-2 (Output 2) ein negatives Rechtecksignal zugeführt, über Leitung 30-1 ein positives Signal gemäß dem Output 1. In der zweiten Phase (Phase 2) kehren sich die Verhältnisse um. Das führt zu einer doppelt so hohen an der Brücke anliegenden Rechteckwechsel- Speisespannung Us, die ebenfalls wieder eine Rechteckform hat. Diese führt zu einer entsprechenden Rechteckform bei Ungleichgewicht der Brücke auftretenden Brückenspannung oder Messspannung Um, die auf den Leitungen 28-1 und 28-2, optional durch ein Filter 37, den Eingängen der beiden gegeneinander geschalteten Operationsverstärkern 32-1 und 32-2 zugeführt werden. Das Filter 37 beseitigt z. B. hochfrequente Störsignale. Die über die Leitungen 36-1 und 36-2 ausgegebenen verstärkten Spannungen der beiden Operationsverstärker werden dann einem Block 42, der einen Multiplexer MUX und einen Analog-Digital-Umsetzer ADC umfasst, zur zeitlich versetzten Abtastung der beiden Spannungen und zur Analog-Digitalumsetzung zugeführt, siehe die beiden Signale 36-1 und 36-2 mit den Abtastzeitpunkten 38-1, 38-2 gemäß Fig. 3. Von Block 42 gelangen die Abtastwerte zur Differenzbildung in den Mikrocontroller 40. Dieser Mikrocontroller 40 erzeugt auch vorzugsweise direkt die Wechselspannung für die Messbrücke, siehe die Leitungen, die von dem Mikrocontroller 40 zu der Messbrücke führen und mit 30-1 und 30-2 bezeichnet sind.

Die Erzeugung des Umschalttaktes, die Erzeugung der Wechselspannung zur Speisung der Messbrücke, wie auch die End-Auswertung der von der Messbrücke gelieferten Brückenspannung erfolgt somit vorteilhafterweise mit dem gleichen Baustein.

Durch das eingangs geschilderte Chopperprinzip wird erreicht, dass sowohl die von dem Verstärker erzeugte Offsetdrift (temperatur- und alterungsabhängig), wie auch das niederfrequente Rauschen nach der Mittelwertbildung in der Auswerteeinheit eliminiert wird, wie auch die anderen geschilderten Fehler beseitigt oder verringert werden.

Dabei entfällt die Notwendigkeit von präzisen und damit teuren Verstärkern, statt dessen können normale billige Operationsverstärker verwendet werden.

Da die Differenzbildung im numerischen Prozessor (Teil des Bausteins 40) stattfindet, ist hierfür keine zusätzliche Hardware nötig. Dies führt zu einer günstigen Lösung und vermeidet zusätzliche Fehler in der Differenzbildung.

Zusätzlich zu den Verstärkerfehlern werden auch einige von außen eingekoppelte Fehler unterdrückt und dadurch die EMV (elektromagnetische Verträglichkeit) verbessert. Die Vermeidung von EMV- Massnahmen senkt die Kosten.

Der geschilderte einfache Aufbau der Schaltung mit der numerischen Differenzbildung im Mikrocontroller 40 betrifft Sensoren unabhängig von der zu messenden Größe. Es können somit auch noch andere Signalverarbeitungen nach dieser Differenzbildung getroffen werden.

Auch der einfache Aufbau der Schaltung mit der direkten Versorgung der Sensorelemente aus dem Mikrocontroller betrifft Sensoren aller Art, unabhängig von der zu messenden Größe.

Der erfindungsgemässe Chopperverstärker kann einen solchen Aufbau aufweisen, dass entweder vor dem Sensorelement die Phasenumschaltung erfolgt (z. B. mittels Umschaltung der Speisespannung), oder hinter dem Sensorelement (z. B. durch Umschaltung seines Ausgangssignals). Anschließend wird das so getaktete Messsignal gefiltert und verstärkt.

Die Phasenumschaltung des Verstärkerausgangssignals und die Mittelwertbildung kann hinsichtlich des Analogwertes erfolgen, also vor dem Analog-Digitalwandler, oder hinter diesem.

Ein anderer möglicher Aufbau des Chopperverstärkers wäre der folgende:
Druckaufnahmeelement - Phasenumschaltung-Eingang - Filter - Verstärker, Phasenumschaltung-Ausgang (verwirklicht durch Software) - Analog-Digital-Wandler-Mittelwertbildung (Software).

## Patentansprüche

1. Signalverarbeitungseinrichtung für einen Druckschalter oder dgl., umfassend ein Sensorelement (10), wie Drucksensor zur Lieferung eines einem anstehenden Druck od. dgl. entsprechenden analogen elektrischen Signals, eine dem Sensorelement nachgeschaltete Signalverarbeitungseinheit (12) zur Verstärkung und Digitalisierung des analogen Signals, und eine der Signalverarbeitungseinheit (12) nachgeschaltete Ansteuereinheit (14) für elektrische Schalter (18) zur Schaltung von externen Lasten, für eine Anzeigeeinrichtung (16), für Produktionsschnittstellen (20) und dgl., *wobei* die Signalverarbeitungseinheit (12) einen Chopperverstärker umfaßt, *und die Signalverarbeitungseinheit* (12) die Polarität des am Eingang des *Chopperverstärkers* anliegenden, vom Sensorelement (10) gelieferten analogen elektrischen Signals sowie des an Ausgang des Chopperverstärkers, anliegenden verstärkten analogen elektrischen Signals im gleichen Takt umschaltet oder verrechnet,
***dadurch gekennzeichnet,***
**daß** das Brückenausgangssignal (28-1, 28-2) des Sensorelements (10) einer zwei Operationsverstärker (32-1, 32-2) umfassenden, zwei Eingänge (34-1, 34-2) und zwei Ausgänge (36-1, 36-2) aufweisenden Schaltung zugeführt wird, die so aufgebaut ist, daß sie an ihren zwei Ausgängen zwei Spannungen (38-1, 38-2) mit einer Höhe liefert, die der vom Sensorelement (10) abgefühlten Meßgröße, wie Druck entspricht, *und* daß die zwei Ausgänge (36-1, 36-2) einem Block (42), der einen Multiplexer und einen Analog-Digital-Wandler umfasst, vorgeschaltet sind, der die beiden Spannungen (38-1, 38-2) *im gleichen Takt* zeitlich nacheinander *in einer ersten und in einer zweiten* Phase abtastet und in numerische Werte umwandelt und eine Differenzbildung der beiden Werte *der resultierenden Signale in der ersten und in der zweiten* Phase in einer seinem Ausgang nachgeschalteten Einheit (40) ermöglicht.

2. Signalverarbeitungseinrichtung nach Anspruch 1, wobei das Sensorelement (10) einen Meßwiderstand oder eine Meßbrücke (26-1, 26-2, 26-3, 26-4) darstellt, **dadurch gekennzeichnet, daß** die Umschaltung der Polarität des am Eingang des Chopperverstärkers anliegenden Signals **dadurch** erreicht wird, daß dem Meßwiderstand oder der Meßbrücke als Speisespannung eine Rechteckwechselspannung (30-1, 30-2) mit der Taktfrequenz zugeführt wird.

3. Signalverarbeitungseinrichtung nach einem der Ansprüche 1 oder 2, **dadurch gekennzeichnet, daß** der Umschalttakt in einer Mikrocontrollereinheit (40) erzeugt wird.

4. Signalverarbeitungseinrichtung nach Anspruch 1, 2 *oder* 3, **dadurch gekennzeichnet, daß** die Differenzbildung von *einer oder* der Microcontrollereinheit (40) gesteuert wird und/oder in ihr erfolgt.

5. Signalverarbeitungseinrichtung nach Anspruch 2, 3 oder 4, **dadurch gekennzeichnet, daß** die Speisespannung für den Meßwiderstand oder die Meßbrücke von *einer oder* der Microcontrollereinheit (40) geliefert wird.

## Claims

1. Signal processing unit for a pressure switch or the like comprising a sensor element (10) such as pressure sensor to supply an analog electrical signal corresponding to an existing pressure or the like, a signal processing unit (12) being connected downstreem of the sensor element for amplifiying and digitizing the analog signal, and a control unit (14) for electrical switches (18) for switching external loads, for a display unit (16), for production interfaces (20) and the like the control unit being connected downstream of the signal processing unit (12), whereby the signal processing unit (12) comprises a chopper amplifier and whereby the signal processing unit (12) switches or balances the polarity of the analog electrical signal present at the input of the chopper amplifier and supplied by the sensor element (10) and of the amplified analog electrical signal present at the output of the chopper amplifier at the same clock rate, **characterized in that** the bridge output signal (28-1, 28-2) of the sensor element (10) is supplied to a circuit that comprises two operational amplifiers (32-1, 32-2), two inputs (34-1, 34-2) and two outputs (36-1, 36-2), the circuit being configured such that at its two outputs two voltages (38-1, 38-2) are created having a magnitude corresponding to the measured quantity e. g. pressure sensed by the sensor element (10), and that the two outputs (36-1, 36-2) are connected upstream of a block (42) comprising a multiplexer and a analog/digital converter, which alternately samples the two voltages (38-1, 38-2) within the same clock rate in a first phase and a second phase and converts them into numerical values and enables a subtraction of the two values of the resulting signals in the first and in the second phase within a unit (40) connected downstream the converter output.

2. Signal processing unit according to claim 1, wherein the sensor element (10) is a measuring resistor or a measuring bridge (26-1, 26-2, 26-3, 26-4) **characterized in that** the switching of the polarity of the signal present at the input of the chopper amplifier is obtained by supplying a square wave AC voltage (30-1, 30-2) as supply voltage to the measuring resistor or measuring bridge at the clock rate.

3. Signal processing unit according to one of the claims 1 or 2, **characterized in that** the clock rate is generated within a microcontroller unit (40).

4. Signal processing unit according to claim 1, 2 or 3 **characterized in that** the subtraction is controlled and/or is performed by a or the microcontroller unit (40).

5. Signal processing unit according to claim 2, 3 or 4, **characterized in that** the supply voltage for the measuring resistor or the measuring bridge is supplied by a or the microcontroller unit (40).

## Revendications

1. Dispositif de traitement des signaux pour un interrupteur à pression ou élément similaire, comportant un élément capteur (10), tel qu'un capteur de pression pour délivrer un signal électrique analogique correspondant à une pression appliquée ou similaire, une unité de traitement des signaux (12) montée en aval de l'élément capteur et destinée à amplifier et numériser le signal analogique, et une unité d'activation (14), montée en aval de l'unité de traitement des signaux (12), pour un interrupteur électrique (18) destiné à commuter des charges externes, pour un dispositif d'affichage (16), pour des interfaces de production (20) et similaires, l'unité de traitement des signaux (12) comportant un amplificateur de découpage, et l'unité de traitement des signaux (12) commute ou calcule dans la même impulsion la polarité du signal électrique analogique reçu à l'entrée de l'amplificateur de découpage et délivré par l'élément capteur (10), de même que du signal électrique analogique amplifié reçu à la sortie de l'amplificateur de découpage,
**caractérisé en ce que**
le signal de sortie du pont (28-1, 28-2) de l'élément capteur (10) est acheminé vers un circuit, qui comporte deux amplificateurs opérationnels (32-1, 32-2), deux entrées (34-1, 34-2) et deux sorties (36-1, 36-2), et qui est conçu de telle sorte qu'il fournit au niveau de ses deux sorties deux tensions (38-1, 38-2) avec une valeur qui correspond à la grandeur de mesure détectée par l'élément capteur (10), et **en ce que** les deux sorties (36-1, 36-2) sont montés en amont d'un bloc (42) qui comporte un multiplexeur et un convertisseur analogique-numérique et qui, dans la même impulsion, explore les deux tensions (38-1, 38-2) l'une après l'autre dans le temps dans une première et dans une deuxième phase et les transforme en valeurs numériques et permet une formation de différence des deux valeurs des signaux résultants dans la première et dans la deuxième phase dans une unité (40) montée en aval de sa sortie.

2. Dispositif de traitement des signaux selon la revendication 1, dans lequel l'élément capteur (10) constitue une résistance de précision ou un pont de Wheatstone (26-1, 26-2, 26-3, 26-4), **caractérisé en ce que** la commutation de la polarité du signal appliqué à l'entrée de l'amplificateur de découpage est obtenue par le fait qu'une tension alternative rectangulaire (30-1, 30-2) est acheminée avec la fréquence d'impulsion vers la résistance de précision ou le pont de Wheatstone en tant que tension d'alimentation.

3. Dispositif de traitement des signaux selon la revendication 1 ou 2, **caractérisé en ce que** l'impulsion de commutation est générée dans une unité de micro-contrôleur (40).

4. Dispositif de traitement des signaux selon la revendication 1, 2 ou 3, **caractérisé en ce que** la formation de différence est commandée par une ou par l'unité de micro-contrôleur (40) et/ou est effectuée dans celle-ci.

5. Dispositif de traitement des signaux selon la revendication 2, 3 ou 4, **caractérisé en ce que** la tension d'alimentation pour la résistance de précision ou le pont de Wheatstone est délivrée par une ou par l'unité de micro-contrôleur (40).
